# EUROPEAN PATENT APPLICATION

(11) **EP 2 620 905 A1**
(43) Date of publication of application: **31.07.2013**
(21) Application number: 13151686.6
(22) Date of filing: 17.01.2013
(51) Int. Cl.: G06Q 30/02

(54) **Advertising systems and methods using embedded map**

(30) Priority: 26.01.2012 US 201261591114 P
(71) Applicant: HYUNDAI MOTOR COMPANY, Seoul 137-938 (KR)
(72) Inventor: Park, Cheol Woo, 138-751 Seoul (KR); Kwon, Soon Sung, 431-904 Anyang-si (KR)
(74) Representative: Isarpatent

(57) **Abstract**

An advertisement system using an embedded map is disclosed, which increases advertisement profits of a service enterpriser (i.e., a service provider) using an embedded map. The advertisement system using an embedded map includes a Space of Interest (SOI) server for generating location based data using SOI information, and an advertisement server for collecting/storing log information of advertisement information exposed on the embedded map of a user terminal, and providing advertisement content information to an advertisement region of the embedded map using the location based data.

## Description

### CROSS-REFERENCE TO RELATED APPLICATIONS

This application claims priority under 35 U.S.C. § 119(e) to U.S. Provisional Patent Application Serial No. 61/591,114, filed January 26, 2012. The entire content of each of the above-referenced patent applications is hereby incorporated by reference herein.

### FIELD OF THE INVENTION

Embodiments of the present invention relate to an advertisement system using an embedded map, and more particularly to a technology for increasing advertisement functionality when using a map for providing location information.

### BACKGROUND OF THE INVENTION

Generally, enterprises or governmental and public offices provide customers or users with a variety of advertisement messages not only using traditional mass media such as newspapers or broadcasting, but also using leaflets and the Internet. However, the above-mentioned conventional advertisement methods have difficulty in changing or replacing advertisement content to or with new advertisement content, and also have difficulty in recycling the pre-manufactured advertisement materials, resulting in an increase in additional costs.

In addition, in case the advertisement device is used for providing a variety of advertisement messages to customers or users (e.g., who use banks or public offices), provided that advertisement contents of the advertisement device are changed to new advertisement contents, the advertisement device has difficulty in updating/uploading the advertisement contents. Particularly, the size of a display for the advertisement is restricted such that the advertisement device has difficulty in attracting the user's interest.

### BRIEF SUMMARY OF THE INVENTION

Various embodiments of the present invention are directed to providing an advertisement system using an embedded map that substantially obviates one or more problems due to limitations and disadvantages of the related art.

It is an object of the present invention to provide an advertisement system using an embedded map, which exposes an advertisement message on an embedded map of the entire content displayed on a user terminal (e.g., the text portion thereof), such that the corresponding advertisement efficiency can be maximized (e.g., and advertisement profits of the service provider can be increased).

It is another object of the present invention to provide an advertisement system using an embedded map, which provides advertisement information to an embedded map using SOI (space of interest) information or POI (point of interest) information to the embedded map, such that correct location based data can be provided to each user. A space of interest (SOI) refers to a collection of data about a space of people's interest or use. An SOI is made up of point, line and/or plane and has a unique identifying data.

It is another object of the present invention to provide an advertisement system using an embedded map, which provides advertisement images or moving image contents through the embedded map, thereby attracting users' attention and maximizing the advertisement effect.

In accordance with one embodiment of the present invention, an advertisement system using an embedded map includes a space of interest (SOI) server for generating location based data using SOI information; and an advertisement server for collecting/storing log information of advertisement information exposed on the embedded map, and providing advertisement content information to an advertisement region of the embedded map using the location based data.

In accordance with another embodiment of the present invention, an advertisement system using an embedded map includes a server for generating location based data; and an advertisement server for collecting/storing log information of advertisement information exposed on the embedded map of a user terminal, and providing advertisement content information to an advertisement region of the embedded map using the location based data.

### BRIEF DESCRIPTION OF THE DRAWINGS

FIG. 1 is a block diagram illustrating an advertisement system using an embedded map according to an embodiment of the present invention.
FIG. 2 is a flowchart illustrating a method for directing an advertiser to register advertisement information using the advertisement system of FIG. 1.
FIG. 3 is a flowchart illustrating an advertisement method using an embedded map according to another embodiment of the present invention.
FIGS. 4 to 9 illustrate exemplary screen images of the advertisement system using an embedded map according to an embodiment of the present invention.

### DESCRIPTION OF EMBODIMENTS

Reference will now be made in detail to the embodiments of the present invention, examples of which are illustrated in the accompanying drawings. Wherever possible, the same reference numbers will be used throughout the drawings to refer to the same or like parts.

Recently, with the widespread use and development of the Internet, Internet advertising is being spotlighted as new advertisement means. There is a newly proposed online advertisement method that requires relatively lower costs and achieves higher advertisement effects with longer persistency, as compared to the offline advertisement method.

A variety of online advertisement methods over the Internet have been widely used, for example, providing advertisement information through homepages of individual enterprises, providing banner advertisement information on website of each website administrator, displaying advertisement information at a specific location of an electronic map on the basis of Geographic Information System (GIS), etc.

The above-mentioned online advertisement method obviates spatial and temporal limitations and at the same time can exchange information with a large number of people in real time. The online advertisement method easily reaches customers or users (e.g., to induce purchases of desired commodities) in real time through an online mode, such that its own advertisement effect can be superior to that of the offline advertisement method employing TVs, newspapers, etc. Therefore, various online advertisement methods have recently been developed and widely used throughout the world.

However, each advertisement-agent webpage including online advertisement information must be displayed on a limited-sized screen such that it is difficult to expose many advertisement messages at one time. In addition, as most advertisers desire to expose their advertisement messages at more competitive and superior locations, advertisement agencies desire to make higher profits using their advertisement messages, such that a variety of online advertisement models for exposing online advertisement information on webpages for advertisement have been developed and widely used.

In addition, the conventional content-based advertisement includes a mapping advertisement based on some keywords from the entire text, a text advertisement, or a banner advertisement.

However, the conventional online advertisement method exposes keyword-based advertisement content when displaying place-associated advertisement messages, such that it has a limitation either in directly advertising on a desired place or in displaying advertisement messages on neighboring places of a specific place. That is, advertisement information related to the entire body of content can be restrictively provided only to the system to which content belongs.

An advertisement system according to one embodiment of the present invention includes a user terminal 100, a space of interest (SOI) server 200, and an advertisement server 300.

The user terminal 100 includes an embedded map 110.

The advertisement server 300 includes an advertisement processor 310, an Application Programming Interface (API) 320, a Logger API 330, and a database (DB) 340. In this case, the DB 340 includes an advertisement DB 341, an advertisement log DB 342, and an advertisement content DB 342.

First, the user terminal 100 can include internal contents or external contents, and include an embedded map 110 on which advertisement information is exposed.

The embedded map 110 includes information of an embedded map within a particular user terminal's displayed content (e.g., within a text portion of the contents, and exposes an advertisement region on the map. The term "embedded map" means a map located at a specific region of the displayed content (e.g., the text portion thereof) of the user terminal 100.

In this case, content exposing the embedded map 110 is composed by the content manufacturer. Through the embedded map 110, a user can select a specific space and write letters, or can attach a link of the pre-composed embedded map and expose the attached result on internal content or external content of the corresponding enterprise. In addition, the content manufacturer can preselect the location of an advertisement message exposed on the embedded map 110 on a Webpage of the user terminal 100.

A user who desires to obtain location of a specific location using the embedded map 110 accesses the user terminal 100 such as a computer, a mobile phone, or a smartphone, such that the user can easily receive objective-region related information such as distance, terrain feature, road information, etc. from the user terminal 100.

The SOI server 200 generates location-based data in SOI units, and manages/processes location based data.

In more detail, the SOI server 200 generates SOI information (such as location information, shape information, SOI ID, etc.), inquires of SOI information about the location information, the shape information, the SOI ID information, etc., and corrects the corresponding information. The SOI server 200 collects data information and the like, and generates location-based data on the basis of SOI information.

In addition, the SOI server 200 manages location-based data in SOI units, accumulatively manages location information, shape information, ID information, etc. Although the above-mentioned information is changed or deleted according to time variation, the SOI server 200 can preserve and manage the corresponding information.

In addition, the advertisement processor 310 of the advertisement server 300 combines location-based data generated from the SOI server 200 with advertisement information, thereby deciding advertisement information to be displayed. The advertisement processor 310 receives advertisement-related content information from the user terminal 100 through the API 320, and stores the received information in the advertisement DB 341. In this case, the advertisement-related content information can include URL catcher information or Application Programming Interface (API) information of a parent page.

Upon receiving location based data from the SOI server 200, the advertisement processor 310 extracts advertisement information of the corresponding location or region from the advertisement DB 341.

The advertisement processor 310 combines advertisement information extracted from the advertisement DB 341 with location based data, analyzes a condition according to the combined result, and exposes SOI information and advertisement zone of the corresponding location on the embedded map 110.

In this case, advertisement information decided by the advertisement processor 310 is transmitted to the embedded map 110 of the user terminal 100 through the API 320. In addition, the advertisement processor 310 analyzes a text of content, a map region, a keyword, an advertisement term, an advertisement time, and a terminal type, decides an appropriate advertisement, and provides the decided advertisement.

In this case, the advertisement DB 341 storing advertisement information therein can include advertiser information, advertisement-costs payment information, a business type, and advertiser-registered page information. The advertisement DB 341 can include advertisement-region information, moving image information of the corresponding advertisement region, image information of the corresponding advertisement region, and advertisement content information on the basis of the location based data.

The advertisement processor 310 analyzes information stored in the advertisement DB 341, selects at least one company corresponding to the corresponding advertiser from among companies contained in the embedded map 110, and displays SOI information.

The advertisement log DB 342 collects and stores log information of the exposed advertisement. In this case, the log information includes inquiry logger information, advertisement-inquiry logger information, URL catcher information of a parent page.

Inquiry logger information stored in the advertisement log DB 342 indicates the number of advertisement-exposing times for the user who views the corresponding advertisement page. In this case, the advertisement-inquiry logger information indicates the number of advertisement-clicking times of the user who clicks on the exposed advertisement information. In addition, URL catcher information of the parent page indicates which one of pages contained in the internal or external content has been used to expose the corresponding advertisement.

The logger API 330 collects the above-mentioned information through the embedded map 110, and transmits the collected information to the advertisement processor 310. The advertisement processor 310 stores the above-mentioned information collected through the logger API 330 in the advertisement log DB 342.

In addition, the advertisement content DB 343 collects and stores the advertisement log contents of individual contents. The advertisement content DB 343 analyzes log information stored in the advertisement log DB 342, and arranges/stores the analyzed information while being classified according to contents. That is, a plurality of advertisement contents can be stored in response to selection of the advertiser. The advertisement, content DB 343 classifies advertisers and the corresponding advertisement contents according to a contract condition, and stores the classified result.

The advertisement processor 310 analyzes log information stored in the advertisement content DB 343, and pays advertisement costs to the advertisement media on the basis of the analyzed result.

In this case, the advertisement media can be a content manufacturer (including an internal or external content manufacturer) who manufactures content displayed on the user terminal 100, or a service enterpriser who manages the advertisement server 300.

The service enterpriser extracts advertisement costs, advertisement-exposure targets, a device and profit sharing ratio, etc. Based on the extracted information, the service enterpriser distributes profits to advertisement media exposing the corresponding advertisement.

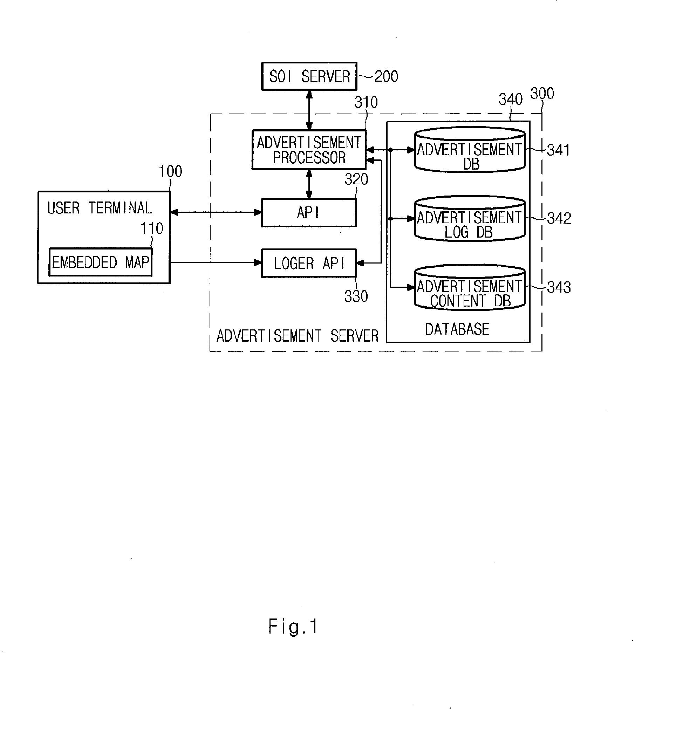

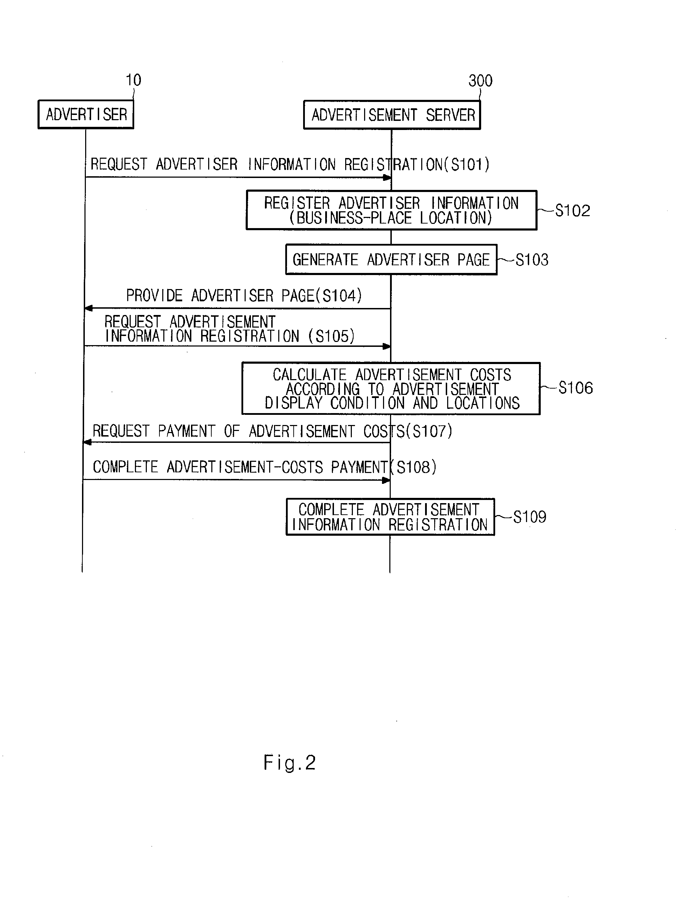

FIG. 2 is a flowchart illustrating a method for directing an advertiser to register advertisement information using the advertisement system of FIG. 1.

Referring to FIG. 2, if the advertiser 10 transmits an advertiser information (e.g., business-place location information) to the advertisement server 300 in step S101, the advertisement server 300 registers advertiser information (e.g., business-place location information) in step S102, and generates the advertiser page in step S103.

Thereafter, the advertisement server 300 provides the advertiser page to the advertiser 10 in step S104, and the advertiser 10 transmits an advertisement information registration request to the advertisement server 300 through the advertiser page in step S105.

In this case, the advertiser 10 inputs a variety of information regarding advertisement content, advertisement conditions (e.g., time zone, duration, etc.), advertisement locations (e.g., top, center, and bottom of the page), and advertisement connection information (e.g., moving image, banner, text, link, and highlight) through the advertiser page.

Therefore, the advertisement server 300 calculates advertisement costs according to a variety of information (e.g., an advertisement condition, advertisement connection information, and advertisement location) in step S106, and requests the advertiser 10 to pay for advertisement costs in step S107. In this case, if the advertiser desires to expose his or her advertisement information at a high-rank location of the low-rank SOI directory, or if the advertiser desires to highlight his or her advertisement information, the advertisement server 300 can request additional advertisement costs from the advertiser.

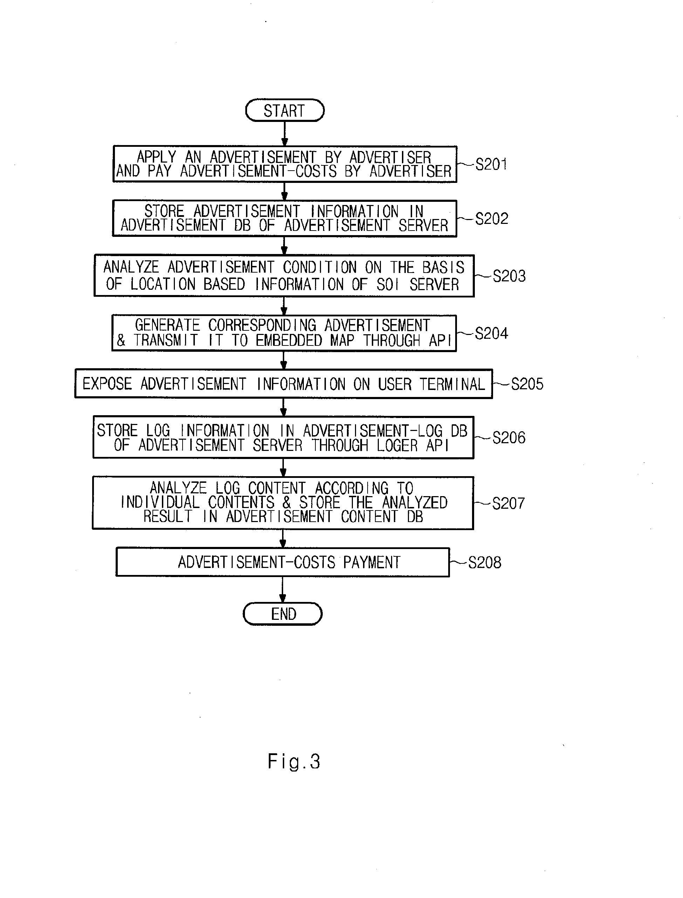

FIG. 3 is a flowchart illustrating an advertisement method using an embedded map according to another embodiment of the present invention.

Referring to FIG. 3, the advertiser inputs his or her subscription information so as to request the advertisement server 300 to display advertisement information, pays advertisement costs, and registers advertisement information (step S201).

In this case, the subscription information entered by the advertiser can include information of the advertiser, an advertisement format, advertisement content, business location information of an enterprise to be advertised, an advertisement region, an advertisement place, an advertisement space, an advertisement exposure duration, a terminal type, or homepage address of the corresponding enterprise. The method for allowing the advertiser to request the advertisement server 300 to display desired advertisement information as well as to pay advertisement costs has already been disclosed in FIG. 2.

In this case, the method for registering advertisement information by the advertiser can also be achieved by an additional advertiser terminal.

Thereafter, advertisement information and payment information entered by the advertiser are stored in the advertisement DB 341 of the advertisement server 300 in step S202.

Subsequently, upon receiving an advertisement request from the advertisement server 300, the advertisement processor 310 of the advertisement server 300 extracts appropriate information from the advertisement DB 340 on the basis of location-based data received from the SOI server 200, and analyzes the extracted information in step S203.

That is, the advertisement processor 310 determines whether an enterprise corresponding to the advertiser stored in the advertisement DB 341 is present in a plurality of enterprises contained in the embedded map 100, and selects advertisement information to be displayed. In this case, the advertisement information is advertisement content related to the corresponding advertiser.

Then the advertisement processor 310 generates the corresponding advertisement in response to the advertisement condition, and transmits the generated advertisement to the embedded map 110 of the user terminal 100 through the API 320 in step S204.

Subsequently, the advertisement information is exposed on the embedded map 110 contained in a displayed content (e.g., text portion) of the user terminal 100 in step S205.

Log information of the advertisement exposed through the embedded map 100 is transmitted to the advertisement processor 310 through the logger API 330. The log information is collected and stored in the advertisement log DB 342 of the advertisement server 300 in step S206.

Thereafter, the advertisement processor 310 collects advertisement log contents according to individual contents, and stores the collected advertisement log contents in the advertisement content DB 343 in step S207.

The advertisement processor 310 pays advertisement costs to the advertisement media exposing the corresponding advertisement on the basis of log information stored in the advertisement content DB 343 in step S208.

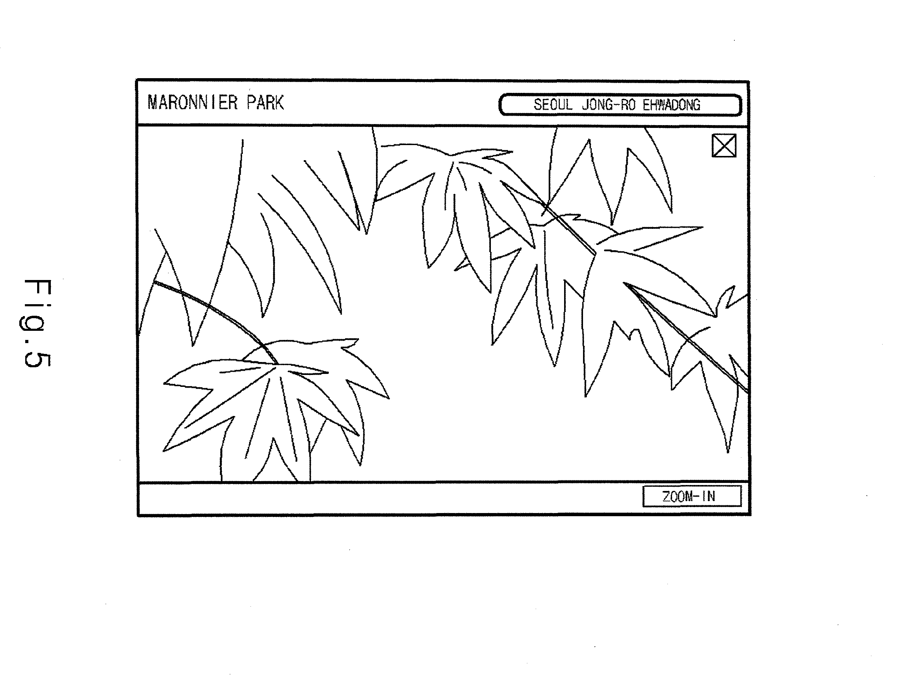

For example, when calculating advertisement costs, the advertisement costs can be determined by the number of logging times based on a Cost Per Click (CPC) scheme. The embodiment of the present invention can determine advertisement profits according to the number of moving-image clicks as shown in FIG. 5.

According to the above-mentioned CPC scheme, whenever the Internet user clicks on the corresponding advertisement and connects to a moving image linked to the corresponding advertisement region, additional advertisement profits can be obtained. A variety of methods can be used to pay advertisement costs, and are not limited to the CPC scheme only and applicable to other examples as necessary.

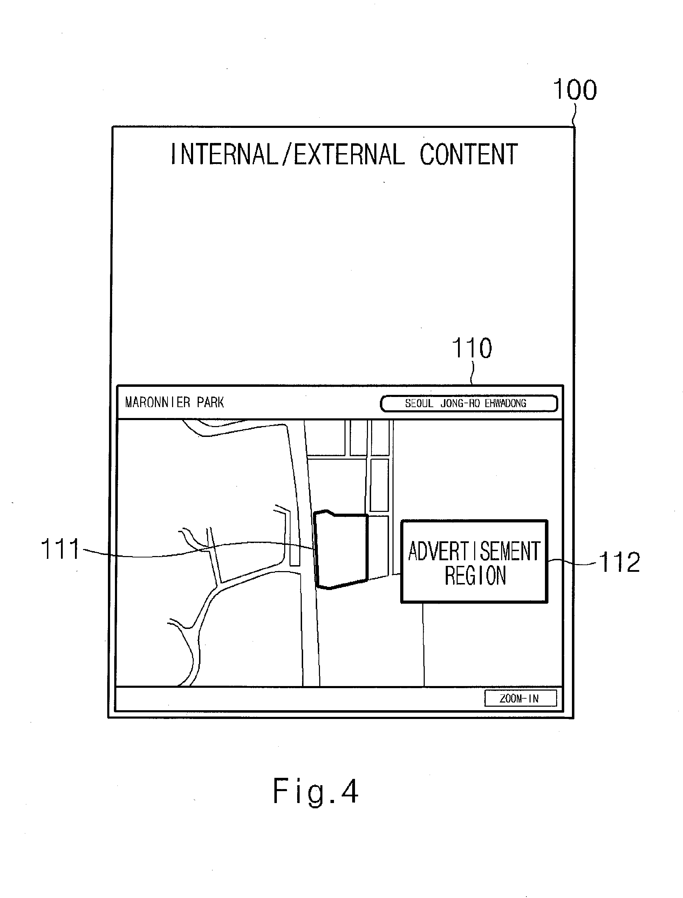

FIGS. 4 to 9 illustrate exemplary screen images of the advertisement system using an embedded map according to an embodiment of the present invention.

The embedded map 110 on which advertisement information is exposed can be displayed as shown in FIG. 4 on the basis of SOI information.

Referring to FIG. 4, the SOI information 111 is displayed at the corresponding location of the embedded map 110, and the advertisement region 112 depending upon the SOI information 111 is displayed in text form.

In this case, if a user clicks on the advertisement region 112 of the embedded map 110, the user moves to the corresponding page registered by the advertiser.

In addition, if the user clicks on the advertisement region 112 of the embedded map 110, an advertisement moving image pre-stored in the advertisement DB 341 can be displayed on the embedded map 110 as shown in FIG. 5. In this case, if the user clicks on a specific banner in a moving image screen displayed on the embedded map 110, the user can move to the corresponding page registered by the advertiser.

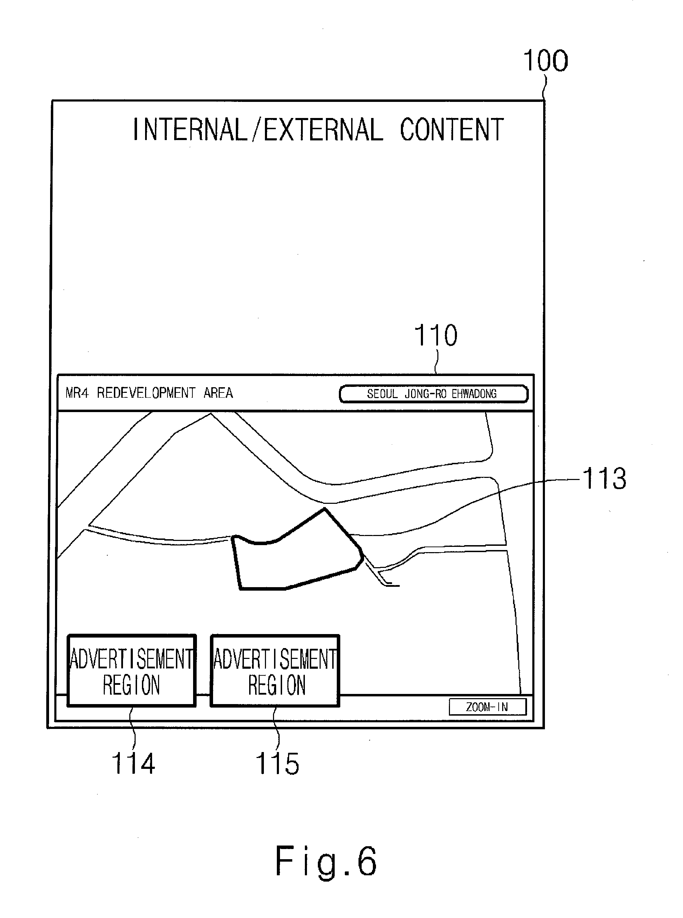

FIG. 6 shows a marker scheme in which the advertisement moving image screen overlaps with the embedded map 110 over the network and map information interacts with advertisement content information.

In addition, SOI information 113 on the embedded map 110 can be displayed as shown in FIG. 6.

Referring to FIG. 6, the SOI information 113 is displayed at the corresponding location of the embedded map 110. The advertisement regions 114 and 115 depending upon SOI information 113 can be displayed as a text form at several locations. As can be seen from FIG. 6, multiple advertisement regions 114 and 115 are displayed at a lower part of the embedded map 110 so as not to overlap with the SOI information 113.

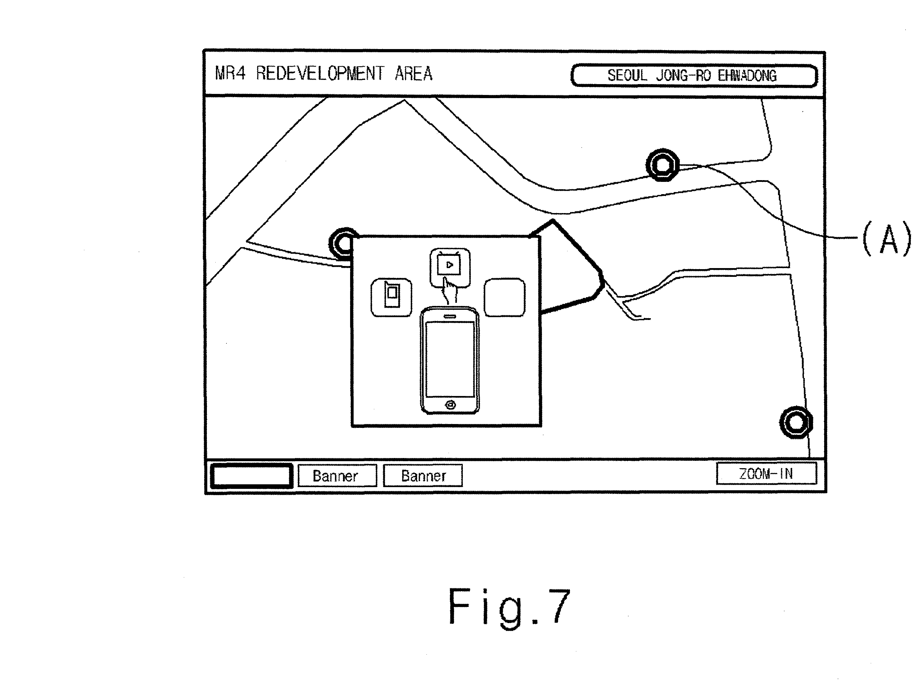

In this case, if the user clicks on the advertisement region 114 of the embedded map 110, the advertisement image pre-stored in the advertisement DB 341 can be displayed as shown in FIG. 7. That is, as can be seen from FIG. 7, the advertisement image is provided in the form of a banner advertisement. In this case, the banner advertisement can provide not only enterprise information but also the presence or absence of discount coupon, estimation information, etc.

In FIG. 7, (A) indicates location information of each branch store which sells commodities or goods of an enterprise requested by the advertiser.

FIG. 7 shows a marker scheme in which the advertisement image overlaps with the embedded map 110 over the network and map information interacts with advertisement content information.

In this case, the advertisement content can include a variety of information of an advertiser-related enterprise, for example, a name of the advertiser-related enterprise, address, phone number, a homepage, homepage connection tap, phone connection tap, coupon and advertisement words, etc.

In this case, if the user clicks on a specific banner contained in the advertisement image displayed on the embedded map 110, the user can move to the corresponding page registered by the advertiser.

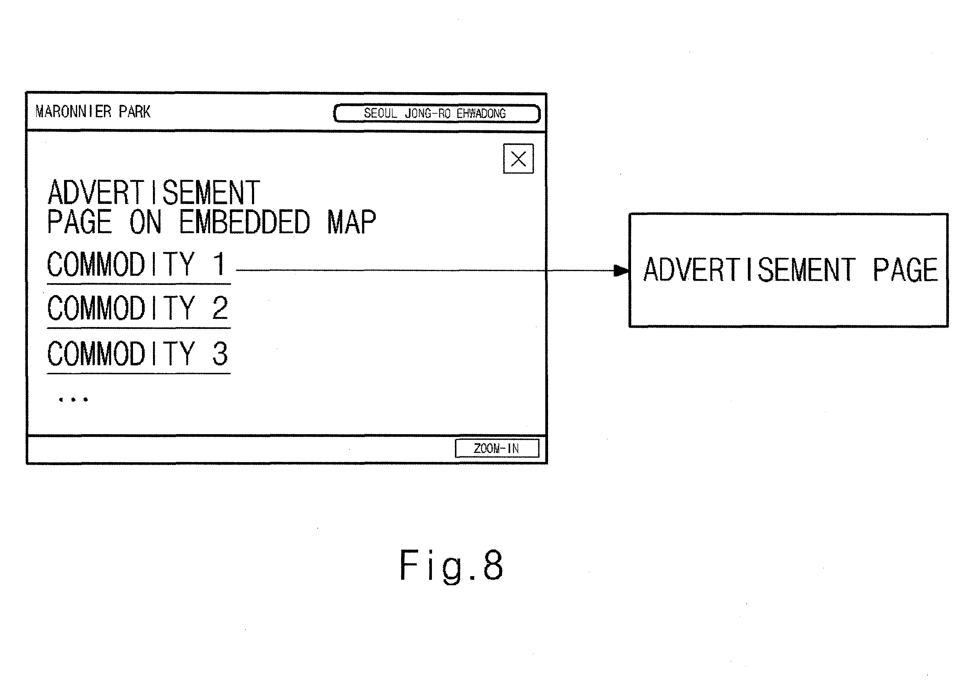

If the user clicks on one interest commodity from among multiple commodities through the advertisement image screen of the embedded map 110, the user moves again to the advertiser page of the selected commodity as shown in FIG. 8.

For example, exposing an event information page of Hyundai Motors at a specific location (exposing the location of Hyundai Motors Branch) of the embedded map 110 is requested. In addition, the Hyundai Motors event advertisement is exposed by matching an advertisement application condition of the advertiser with the advertisement of the embedded map 110.

If the user clicks on an event advertisement on the screen image of the embedded map 110, a detailed page is displayed. The list of agents capable of participating in the Hyundai Motors event is arranged and exposed on the corresponding page. If the user selects one interested commodity using the above list, a current display image moves to another link connected to the selected commodity. In this case, the connected link can be a specific page or location.

Therefore, provided that the user desires to recognize more detailed information of his or her interested commodity by viewing the advertisement image, the user directly clicks on the screen displaying the corresponding advertisement image, such that the user can acquire the corresponding information, resulting in an increased advertisement effect and providing greater convenience to the user.

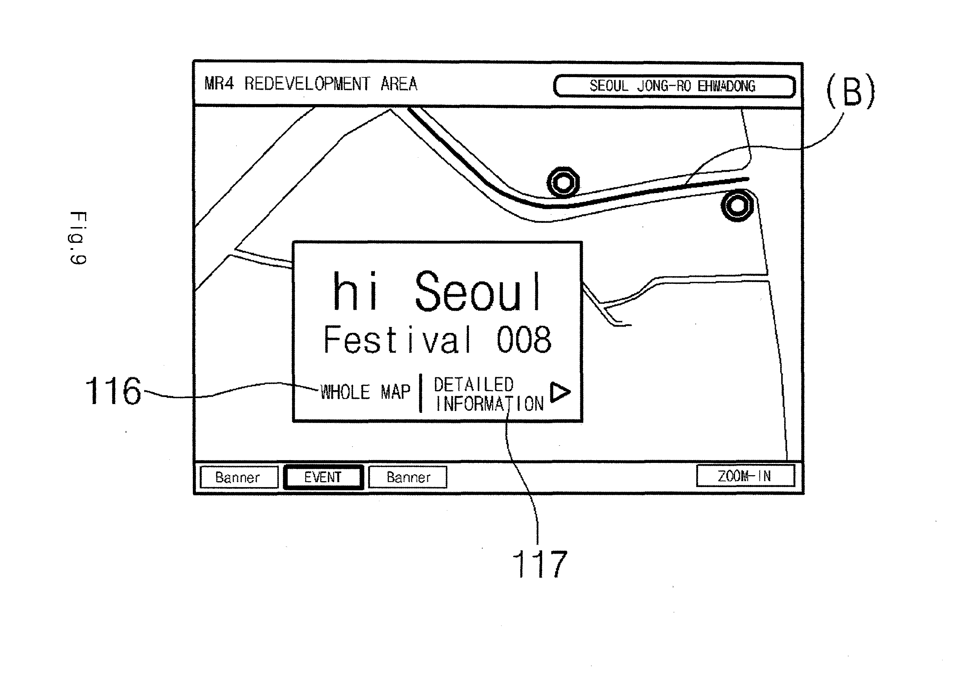

Meanwhile, if the user clicks on the advertisement region 115 of the embedded map 110, advertiser's advertisement page information pre-stored in the advertisement DB 341 can be displayed on the embedded map 110 as shown in FIG. 9. In FIG. 8, if the user clicks on "Whole Map" 116, (B) indicates the location path of the corresponding event requested by the advertiser.

In this case, if the user clicks on "Detailed Information" 116 on the specific advertisement page displayed on the embedded map 110, the user can move to the corresponding page registered by the advertiser.

In this way, advertisement content provided through a predetermined location of the embedded map 110 can include text advertisement (such as a building name or a company name), an image or symbol advertisement, animation GIF, animation advertisement (such as flash), voice advertisement, moving image advertisement, etc., or can be URL information via which the user can move to a website of the advertiser.

Although the embodiment of the present invention has exemplarily used the SOI server 200 as the server for providing location information for convenience of description, the scope or spirit of the present invention is not limited thereto, and it should be noted that the POI (point of interest) server also providing such location information can also be used without departing from the scope or spirit of the present invention.

Those skilled in the art will appreciate that the present invention can be carried out in other specific ways than those set forth herein without departing from the spirit and essential characteristics of the present invention. The above exemplary embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. Also, it is obvious to those skilled in the art that claims that are not explicitly cited in the appended claims can be presented in combination as an exemplary embodiment of the present invention or included as a new claim by a subsequent amendment after the application is filed.

As is apparent from the above description, the advertisement system using an embedded map according to embodiments of the present invention has the following effects.

The advertisement system according to the present invention can visibly provide advertisement messages associated with an SOI connected to target contents as well as the advertisement messages with neighboring SOIs surrounding the SOI of target contents.

The advertisement system according to the present invention allows each advertiser to provide space- and content- based target advertisement information to users who views the corresponding contents.

The advertisement system according to the present invention allows not only an internal system but also an external system to provide advertisement messages using an embedded map.

The advertisement system according to the present invention allows not only an enterprise providing a platform but also a content provider exposing advertisement information to make profits caused by advertisement.

Assuming that content not directly related to a business field of an advertiser belongs to a neighbor SOI of the business field, the advertisement system according to the present invention allows the advertiser to advertise a desired advertisement message through an embedded map, resulting in an increase in advertiser's satisfaction.

The advertisement system according to the present invention cam provide a new advertisement format appropriate for a variable online environment through extension of a location based service (LBS).

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### SYMBOL OF EACH OF THE ELEMENTS IN THE FIGURES

FIG. 1

| | |
|---|---|
| 100: user terminal | 110: embedded map |
| 200: SOI server | 310: advertisement processor |
| 330: loger API | 300: advertisement server |
| 341: advertisement DB | 342: advertisement log DB |
| 343: advertisement content DB | 340: DB unit |

FIG. 2

| | |
|---|---|
| 10: advertiser | 300: advertisement server |
| S101: Request advertiser information registration | |
| S102: Register advertiser information (business-place location) | |
| S103: Generate advertiser page | |
| S104: Provide advertiser page | |
| S105: Request advertisement information registration | |
| S106: Calculate advertisement costs according to advertisement display condition and locations | |
| S107: Request payment of advertisement costs | |
| S108: Complete advertisement-costs payment | |
| S109: Complete advertisement information registration | |

FIG. 4

| | |
|---|---|
| Internal/external content | 112: advertisement region |

FIG. 6

| | |
|---|---|
| Internal/external content | 114, 115: advertisement region |

FIG. 8
Advertisement page
Advertisement page on embedded map
Commodity 1
Commodity 2
Commodity 3

## Claims

1. An advertisement system using an embedded map, the system comprising:
a space of interest (SOI) server for generating location based data using an SOI object; and
an advertisement server for providing advertisement content information to an advertisement region of the embedded map using the location based data.

2. The advertisement system according to claim 1, wherein the advertisement server is further configured to collect and/or store log information of advertisement information exposed on the embedded map of a user terminal.

3. The advertisement system according to claim 2, wherein the advertisement server comprises:
an advertisement processor for combining the location based data with advertisement information so as to generate the advertisement content information;
an application programming interface (API) for (i) receiving advertisement-related content information from the user terminal, (ii) transmitting the advertisement-related content information to the advertisement processor, and (iii) transmitting the advertisement content information to the user terminal;
a logger API for transmitting the collected log information received from the user terminal to the advertisement processor; and
a database (DB) unit for storing the advertisement information.

4. The advertisement system according to claim 3, wherein the database unit comprises:
an advertisement database (DB) for storing at least one of: advertisement content information displayed on the user terminal, advertiser information, advertisement contents, advertisement condition, an advertisement exposure duration, location information, advertisement-costs payment information, page information, information of the advertisement region, moving-image information, and image information;
an advertisement log DB for storing the log information of the advertisement exposed on the user terminal; and
an advertisement-content DB for arranging and storing the log information according to individual contents.

5. The advertisement system according to claim 4, wherein the content information includes Uniform Resource Locator (URL) catcher information of a parent page.

6. The advertisement system according to claim 3, wherein the advertisement processor analyzes at least one of: a text of contents, a map region, a keyword, an advertisement term, an advertisement time, and a terminal type so as to determine the advertisement contents.

7. The advertisement system according to claim 1, wherein the SOI object includes at least one of: location information, shape information, and SOI identification (ID) information.

8. The advertisement system according to claim 1, wherein the advertisement contents are provided as a moving image to the advertisement region adjacent to the SOI of the embedded map.

9. The advertisement system according to claim 1, wherein the advertisement region is displayed as a text format at a plurality of locations of the embedded map.

10. The advertisement system according to claim 1, wherein the advertisement contents are provided as a banner advertisement to the advertisement region adjacent to the SOI of the embedded map.

11. The advertisement system according to claim 1, wherein the advertisement contents are shown over a map section of the embedded map.

12. The advertisement system according to claim 1, wherein the server generates the location based data using at least one of point of interest (POI) information or location coordinates.

13. An advertisement system using an embedded map, the system comprising:
a server for generating location based data; and
an advertisement server for providing advertisement content information to an advertisement region of the embedded map using the location based data.

14. The advertisement system according to claim 13, wherein the advertisement server is further configured to collect and/or store log information of advertisement information exposed on the embedded map of a user terminal.

15. A method of advertising using an embedded map, the method comprising:
generating location based data using an SOI object; and
providing advertisement content information to an advertisement region of the embedded map using the location based data.

16. The method of claim 15, further comprising:
collecting or storing log information of advertisement information exposed on the embedded map of a user terminal.

17. A method of advertising in an embedded map, the method comprising:
providing map data for display in an embedded map, the map data including a link to one or more advertisements;
receiving a request to view a particular advertisement of the one or more advertisements; and
providing the particular advertisement for display within the embedded map.

18. The method of claim 17, wherein the advertisement for display is displayed over at least a portion of the embedded map.

19. The method of claim 17, wherein the advertisement for display is displayed over substantially the entire area of the embedded map.

20. The method of claim 17, wherein the advertisement for display replaces the embedded map.

21. The method of claim 17, wherein the embedded map includes:
a map; and
one or more additional graphical elements adjacent to the map.

22. The method of claim 21, wherein the advertisement for display is displayed over at least a portion of the map.

23. The method of claim 21, wherein the advertisement for display replaces the map.

24. The method of claim 17, wherein the embedded map is an SOI-based embedded map.
